(19) Europäisches Patentamt
European Patent Office
Office européen des brevets

(11) **EP 2 531 461 B1**

(12) **EUROPEAN PATENT SPECIFICATION**

(45) Date of publication and mention
of the grant of the patent:
**23.01.2019 Bulletin 2019/04**

(51) Int Cl.:
***C04B 28/24*** *(2006.01)*    ***H05B 6/64*** *(2006.01)*

(21) Application number: **11723605.9**

(22) Date of filing: **07.02.2011**

(86) International application number:
**PCT/IB2011/000202**

(87) International publication number:
**WO 2011/095883 (11.08.2011 Gazette 2011/32)**

(54) **COMPOUNDS AND COMPOSITIONS FOR SUSCEPTOR MATERIALS**

VERBINDUNGEN UND ZUSAMMENSETZUNGEN FÜR SUSZEPTORMATERIALIEN

COMPOSÉS ET COMPOSITIONS POUR MATÉRIAUX SUSCEPTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2010 IT MI20100180**

(43) Date of publication of application:
**12.12.2012 Bulletin 2012/50**

(73) Proprietor: **Mascia, Francesco**
**22070 Guanzate (CO) (IT)**

(72) Inventors:
• **MASCIA, Francesco**
**22070 Guanzate (CO) (IT)**

• **FRATTON, Francesco**
**22071 Ronago (CO) (IT)**

(74) Representative: **Gislon, Gabriele**
**Marietti, Gislon e Trupiano S.r.l.**
**Via Larga, 16**
**20122 Milano (IT)**

(56) References cited:
**EP-A2- 0 496 130          WO-A1-97/24295**
**KR-A- 20030 025 720    KR-A- 20030 028 859**
**US-A- 3 594 153           US-A- 4 956 533**
**US-A- 5 183 787           US-A1- 2009 223 324**
**US-B2- 7 998 240**

**Description**

*Field of the invention*

The present invention generally relates to compounds and compositions for susceptor materials. More specifically, the invention relates to the use of iron silicate and compositions capable of increasing their temperature when exposed to radiation caused by an electromagnetic field or by electromagnetic waves. Also object of the present invention is the use of manufactured composite articles made with such compositions, for the heating of a material.

*Background Art*

The use of radiations from an electromagnetic field or electromagnetic waves, such as for example radio frequency and microwave radiation, as a source of energy for heating and cooking has long been known and is based on the fact that electromagnetic radiation excites the molecular motion of certain compounds, including water, causing the heating thereof. These compounds, referred to below, for the purposes of the present invention, as "susceptor compounds", are able to absorb high frequency electromagnetic energy and convert it into heat and/or radiation in the infrared range. For example, known compounds for this purpose are silicon carbide, carbon (usually in the form of graphite or carbon black) metals such as aluminum, copper, zinc, iron, tin and nickel, preferably in the form of metal oxides, in particular FeO, magnetite and $Fe_2O_3$.

The use of materials (referred to below, for the purposes of the present invention, as "susceptor materials") which incorporate the above mentioned susceptor compounds is also known. Thanks to the presence of susceptor compounds these materials increase their temperature when exposed to high-frequency radiation, such as that of microwaves; thus lending themselves to different applications, such as cooking food, in particular the cooking of their surface. According to the use of the susceptor material and the temperature to be reached, the susceptor compounds are dispersed in or bound to different organic or inorganic binders.

As for the surface cooking of foods (so-called "browning" or "crisping"), typical susceptors are provided in the form of sheets and polyester films (PET) metallized with aluminum deposited in thin layers. These sheets are normally used in food packaging, i.e. coupled with cardboard or paper, and are placed in contact with food to give it the coloring and cooking needed. The susceptors of this type are not capable of withstanding repeated cycles of heating, and the packaging is thrown away after use. An additional problem is that the film in PET can release oligomers in cooked food, as reported in Begley et al., Migration into food of polyethylene terephthalate (PET) cyclic oligomers from PET microwave susceptor packaging Food Addit Contam. 1990 Nov-Dec;7(6):797-803.

In order to address the problems mentioned above the so-called cooking "dishes" (crisping dish), in which the active susceptor compound, which reacts to microwaves, is dispersed in an inorganic binder and is applied to the upper layer of a support in dish shape, which is also generally inorganic are also known. A problem with these dishes is the fact that the susceptor compounds are not normally suitable for food contact.

To resolve this problem, over the layer of susceptor material (e.g. graphite and sodium silicate) a layer of inert polymer material is applied such as Teflon, making the surface of the dish suitable for food contact.

Susceptor materials are also used in industrial heating, in applications varying greatly one from the other, for example, susceptors having silicon carbide as an active compound are known for the production of crucibles for the sintering of dental prosthesis in zirconium; more generally, different types of industrial or domestic heating appliances can be made with susceptor materials.

U.S. patent No. US-4956533 relates to ceramic compositions usable in disposable packaging for precooked foods to be heated in microwave ovens. According to this patent alumina ($Al_2O_3$), sodium metasilicate, kaolin, talc or similar ceramic materials are used in the hydrated form, alone or in combination with each other. Such materials are used along with a variety of binders, ranging from PVC to gypsum, which are mixed in a wet state, and then dried to a water content in the range between 2.5% and 10%. The disadvantages of this embodiment are due to the fact that heating is essentially based on the presence of water in the mixture of absorber compounds and the fact that the materials are not able to withstand prolonged or repeated cycles of heating.

KR200800225720 discloses bricks comprising clay or red clay and copper slag, that are used as means to store heat at a less cost than traditional heat accumulating devices such as PCM materials. KR20030028859 discloses a cement composition for the building industry, for protecting human body from electromagnetic pollution, that contains carbon fibers and conductive materials. Copper slag may be present as one of the conductive materials.

U.S. patent No. US-5183787 relates to a ceramic composition usable as a susceptor for microwave heating. The ceramic composites are selected from vermiculite, bentonite, hectorite and zeolites, both in their original and amphoteric form. The compounds are previously activated by treatment with acids or bases in order to chemically modify the ceramic structure and add -OH groups. The activated materials are then mixed with a binder according to standard treatment technology of raw ceramics. The disadvantages of this solution are due to the fact that heating is mainly based on the presence of water in the mixture and the fact that the materials are not able to withstand repeated or prolonged heating cycles.

European Patent Application No.EP0496130 relates to a susceptor composition constituted by a mixture of an inert binder, i.e. transparent to microwave and radio frequencies, such as sodium silicate, with a susceptor compound reactive to microwaves, such as carbon. The main disadvantage of this composition is given by the difficulty of controlling the heating: as a result of repeated heating by microwaves, the temperature of the composition continues to increase, thus causing considerable problems of temperature control and considerable difficulties in resisting prolonged or repeated heating cycles.

WO97/24295 describes a crisping dish that has a sodium silicate foam backing layer (or another alkaline earth silicate), anhydrous, i.e. a material transparent to microwaves (see page 5, lines 4-5), which has a non-foam smooth side on which is laid a layer of anhydrous silicate in which susceptor materials are incorporated, in particular graphite; above the active layer, containing susceptors, is applied a layer of high temperature - resistant polymer, in particular Teflon ®, which allows contact with food. In general, therefore, the known susceptor materials are isolated from contact with the food since unfit to that purpose; they are also isolated from contact with the atmosphere to avoid oxidation. In particular, FeO oxidizes to $Fe_2O_3$, which is a composite susceptor much less active than FeO.

*Summary of the invention*

The aim of the present invention is to solve the problems of the known prior art providing susceptor compounds and compositions containing the same and suitable for being used as susceptor materials, i.e. materials capable of absorbing energy from an electromagnetic field, or anyway electromagnetic waves, converting it into heat.

Within this aim, an object of the present invention is to provide susceptor compounds and compositions of the type mentioned above which can be easily found on the market at limited costs. Another object of the present invention is to provide compositions of the above mentioned type which allow being used for the realization of manufactured composites of shapes suitable for several applications.

Another object of the present invention is to propose a simple and inexpensive process for creating manufactured composites of various shapes utilizing the compositions of the type mentioned above.

These objects are achieved by the present invention, which concerns a new use of the known compound iron silicate.

It was in fact surprisingly found that the compound iron silicate -$Fe_2SiO_4$- (where iron has valence 2) when subjected to radiation from an electromagnetic field or electromagnetic waves (e.g. microwaves), generates a large amount of heat and can then be used as an active compound, by itself or in a susceptor material. The iron silicate and a susceptor material containing $Fe_2SiO_4$ and an inorganic binder are able to reach very high temperatures.

It is therefore an object of the present invention the use of iron silicate according to claim 1.

According to a further aspect of the present invention, it is proposed the use of a composition that is able to increase its temperature when exposed to radiation caused by an electromagnetic field or electromagnetic waves, in which the composition includes iron silicate as a susceptor compound, i.e. as a compound that is susceptible to microwaves and radio frequencies, and that heats up when exposed to them.

Preferably, the composition is substantially anhydrous and iron silicate is in the form of particles dispersed in an organic or inorganic binder. In one aspect of the invention, the inorganic binder is selected from clays and similar materials suitable for the production of ceramics, tiles and slabs in general.

In one embodiment, the manufactured article contains essentially only iron silicate, sintered to form for example a heating element for boilers or heat exchangers. According to a further embodiment of the invention, the manufactured article is in the form of ceramic, porcelain tile or glazed stoneware, such as a cooking plate for industrial or household use, or as a tile or heating slab for use in industrial processes.

A material of any nature can be heated by placing it in direct or indirect contact, or otherwise in heat exchange connection, with a manufactured article according to the invention when it is subjected to radiation by an electromagnetic field or electromagnetic waves. The fact that the compositions according to the invention are substantially anhydrous, renders particularly surprising the fact that they may be able to absorb the radiation from an electromagnetic field or electromagnetic waves.

For the purposes of the present invention, the term "iron silicate" refers to the compound $Fe_2SiO_4$ in its various degrees of purity and said term particularly includes the inorganic compound of iron silicate that is known as a synthetic granulated slag resulting from the refining of ferrous and non ferrous metals, in particular as a byproduct of copper metallurgy. Obtained by cooling the molten slag in water, the "iron silicate" is a solid of a shiny and glassy black color.

The aforesaid slag is normally referred to as "iron silicate" and is used as such, without any special preventive refining. It is therefore another object of the invention the use of said slag as reported in claim 7.

Inorganic compounds selected according to the invention are readily available on the market at a very low cost, since they are production scraps generally destined for other uses. It preferably concerns in fact slag from the refining of copper, zinc, nickel and other nonferrous metals that undergo similar processes of refining to separate these non-ferrous metals from unwanted components, such as iron for example.

The slag is produced by these metallurgical refining processes and are generally used as abrasives: they are in fact iron silicates in the form of granules which can be used as grit for cleaning surfaces by sanding. In different industries the slag can be identified with different names, such as abrasive powder, sand, grit, copper slag grit, mineral grit, grinding grain, etc.; in any case, inexpensive materials and available worldwide in large quantities.

Other iron silicates are however usable which are readily available on the market, such as mineral grains chosen from fayalite, ferrosilite, olivine and/or kirchsteinite, these products are excluded, in themselves, from the protected scope of the present invention which is instead extended to their use as discussed below. The iron silicate is typically mixed with at least one binder compound, for example a compound selected from a clay base compound, a combustible polymer and a low melting compound, or mixtures thereof.

According to another aspect of the present invention a process is presented for heating a composite manufactured article able to increase its temperature when exposed to radiation caused by an electromagnetic field or by electromagnetic waves. The process includes in particular the steps of:

a) providing at least one inorganic susceptor compound sensitive to electromagnetic radiation;
b) producing a composite manufactured article of desired shape and size with said inorganic susceptor compound,
c) exposing said manufactured article to radiation caused by an electromagnetic field or electromagnetic waves.

According to the present invention, the at least one inorganic compound susceptible to electromagnetic radiation is iron silicate in an amount within the range between 30 wt% and 85 wt% of the final product. The radiation is selected from microwaves.

An organic or inorganic binder compound can be mixed to the inorganic compound susceptible to electromagnetic radiation before step b) of the process. For example, the binder compound can be a clay base compound and/or a low melting compound, such as bentonite or similar vitreous materials. In a further embodiment, a polymer or a combustible substance is used as a binder that is eliminated by combustion-oxidation during the sintering procedure of the final manufactured article. An example of this substance is polyvinyl alcohol that is typically used in a diluted aqueous solution.

In the case of using a clay-based binder, the amount of susceptor compound according to the invention (iron silicate) in the composition is between 30 wt% and 85 wt%, preferably between 40 and 60 wt% of the final product.

During step b) of the process, a heating of the inorganic compound as it is, or of the mixture conformed with a binder is performed, to obtain the final manufactured article with the desired shape and characteristics. In addition to heating in conventional ovens, heating the mixture or the compound as such, can be achieved by subjecting the mixture to microwave radiation.

According to a further aspect, a composition according to the present invention can be advantageously used to produce heating elements of various kinds and various shapes, such as, for example, heat exchangers or coatings thereof, containers for heating or cooking foods such as pots, pans and bowls, plates for cooking food and/or heating of the cooking units, tiles and hot-plates for ovens, heating elements of cylindrical shape similar to resistors, heating elements installed in boilers to produce sanitary hot water and/or heating, fan coil units for heating air and the like.

The invention provides several advantages over the prior art.

First, the iron silicate is a very stable compound, which maintains the +2 oxidation state of Fe even when exposed to air and heated: this represents a major advantage compared to FeO, of which is known the use as a susceptor compound, which is oxidized to Fe +3 when exposed to air. Since the susceptor compounds containing Fe +3 are less performant than those based on Fe +2, FeO must be isolated from air. Simultaneously, the iron silicate is a susceptor compound capable of being heated at very high temperatures, with performances superior to those of silicon carbide (SiC).

A further advantage is the thermal stability of iron silicate, a compound that is amorphous, glass-ceramic, which begins to soften above 1000°C reaching a melting point at 1500°C. These properties allow its use in iron silicate manufactured articles (i.e. 100% of the refining slag, as mentioned above) substantially free from binders, such as heating elements in boilers and water heaters, where they can reach very high temperatures without negative response. These elements can then replace the known resistors.

A further advantage is the fact that iron silicate, both as it is (i.e. as obtained from refining slag) and as well as cooking elements and similar susceptor materials in the use according to the present invention are suitable for food contact. In particular, they are able to carry out the requested cooking and browning or crisping of food without releasing metals into the food itself, as set forth below.

The compositions subjected to radiation from a electromagnetic field or electromagnetic waves are heated regardless of their moisture content and allow the heating of the materials with which they are placed in a heat exchanging relationship, such as air, water, aqueous solutions, emulsions, oily substances, solvents, viscous resins or the like, or even solids, regardless of moisture content and/or crystallization water of these materials.

This aspect also allows using compositions according to the invention in various ways, such as heating the thermoplastic materials otherwise heated only by traditional methods.

The compositions according to the present invention can be used pure or mixed together in order to reach the desired thermal behaviour.

A composite manufactured article can be used, in accordance with the present invention, in various ways, for example by subjecting it to electromagnetic radiation in the microwave range, radio frequency and/or infrared range.

*Brief description of the drawings*

These and other advantages will be illustrated below with reference to the illustrative and not limiting drawings attached, in which:

- Figure 1 is a schematic representation of the behavior of various types of materials subjected to radiation from an electromagnetic field or from electromagnetic waves;
- Figure 2 is a graph reporting the measurements of the loss tangent of a granular composition sample according to the present invention as a function of the pressure applied to the granules and the comparison of the values of the material known to have a high absorption of electromagnetic radiation;
- Figure 3 is a schematic representation in perspective of a microwave instrument used to execute heating tests;
- Figures 3A and 3B respectively represent the configuration of the electric field and the magnetic field generated inside the instrument of Figure 3 according to a longitudinal section;
- Figures 4 and 5 are representations of temperature and reflected power curves measured for the composition sample of the present invention as a function of time respectively applying two different power levels of the instrument of Figure 3;
- Figure 6 is a representation of the temperature and reflected power curves detected as a function of time for certain preliminary examples obtained with compositions according to the present invention and subjected to repeated cycles of radiation and deactivation of the instrument of Figure 3;
- Figure 7 is a representation of the temperature curve and power curve absorbed by the system detected as a function of time for a first sample obtained with compositions according to the present invention and subjected to repeated cycles of radiation and deactivation of the instrument of Figure 3;
- Figure 8 is a representation similar to the one of Figure 7 for a second composition sample; and
- Figure 9 is a representation similar to the one of Figure 7 for a third composition sample.

*Detailed description of the invention*

In the present description we will refer in particular to the radiation from materials by electromagnetic radiation in the microwave range (from 300 MHz to 300 GHz), but it has been found that the same considerations are valid for electromagnetic radiation in frequency ranges typical of dielectric heating (radiofrequencies from about 150 MHz to 300 MHz), and also for higher frequencies, for example radiation in the range of submillimetre waves (300 GHz to 10 THz) and, in particular, in the infrared range.

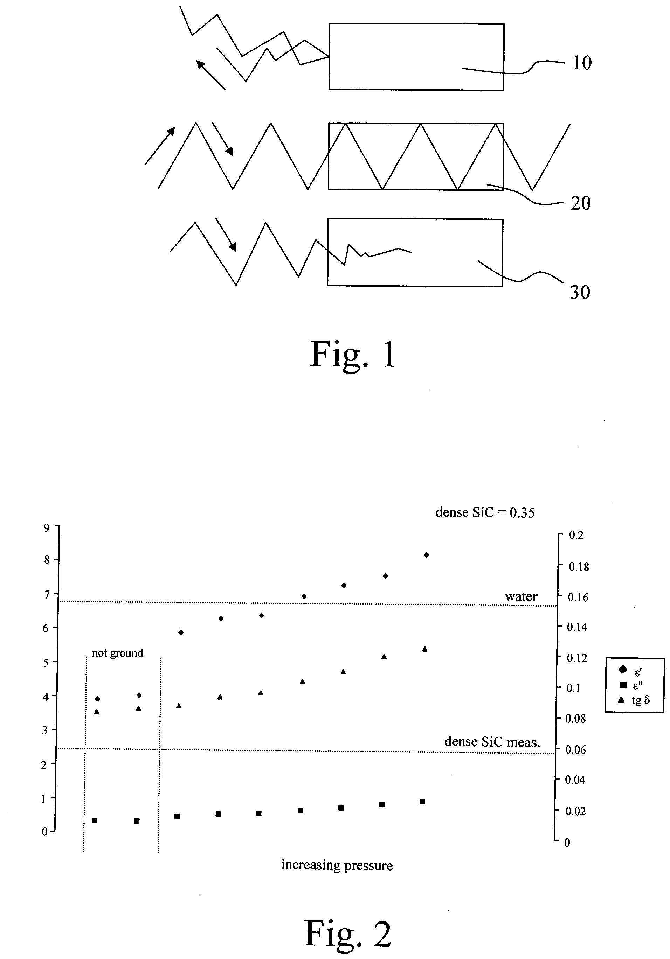

The scheme of Figure 1 represents the behaviour of different materials, depending on their nature, when subjected to irradiation by radiation from an electromagnetic field or by electromagnetic waves. For example, a conductive material 10 completely reflects the radiation while an insulating material 20 results "transparent" to radiation: in both cases, energy is not absorbed by these materials.

There are instead materials 30 that also present high dielectric losses, and are therefore able to absorb at least part of the energy received in the form of electromagnetic radiation, and therefore capable of heating up by transforming the absorbed energy into heat.

Typical high dielectric loss materials are polar liquids, such as water for example and polar organic materials. Metals instead have a too high conductivity and so they simply reflect the microwave energy without heating up.

Many ceramic materials, such as MgO and $SiO_2$ behave like dielectrics at room temperature, i.e. "transparent" to electromagnetic radiation in microwave frequencies, but when carried beyond a critical temperature, they begin to absorb it. Other ceramic materials, such as for example $Co_2O_3$, $MnO_2$, NiO, SiC e CuO, absorb the microwaves even at room temperature.

Electromagnetic radiation, therefore, depending on the type and condition of the material may be transmitted, reflected or absorbed.

For example, when a material is irradiated by microwaves, it is under the action of an oscillating magnetic field and an oscillating electric field: from a microscopic point of view, due to the oscillating electric field, there may be polarization phenomena of the material.

From a macroscopic point of view the state of material polarization is described by an electronic polarization

factor $\varepsilon$, or dielectric permittivity, which depends on the type of polarization and the material.

To describe the polarization state of the material in this case there should be a complex polarization factor $\varepsilon^*$ that depends on the frequency f of the external electric field. The mechanism of interaction or absorption of microwaves by a dielectric material is therefore linked to its permittivity which is a complex number of the form:

$$\varepsilon^* = \varepsilon' - j\varepsilon'' = \varepsilon_0(\varepsilon'_r - j\varepsilon''_{eff})$$

where:

$$j = (-1)^{\frac{1}{2}}$$

$\varepsilon_0 = 8,86 \times 10^{-12}$ F/m, permittivity in free space;

$\varepsilon'_r$ = relative dielectric constant;

$\varepsilon''_{eff}$ = factor of effective relative dielectric loss.

For convenience, the loss mechanisms are often combined into a single loss factor $\tan\delta$ expressed by the relation:

$$\tan\delta = \varepsilon''_{eff} / \varepsilon'_r = \sigma / 2\pi f \varepsilon \varepsilon'_r$$

where $\sigma$ is the total effective conductivity and f is the frequency. The value of $\varepsilon'_r$ is a measure of the polarizability of the material in an electric field, while the value of tan8 is a measure of the loss or absorption of microwave energy within the material. Additional features of the present invention will become more apparent by the following experimental examples conducted upon a sample composition according to the present invention.

Example 1: Analysis of a sample

A sample was analyzed of a composition according to the present invention in the form of coarse powders deriving from reactions of steel with casting refractories. The physical properties are reported in the following Table 1.

**Table 1**

| property | analysis |
|---|---|
| Hardness (Mohs Scale) | 7 |
| Density / specific weight | 3.83 g/cm$^3$ |
| Electrical conductivity | 4.8 mS/m |
| Chloride content | < 0.0002 |
| Form of granules | Multi faceted, sharp and angular edges |
| Granulometry | from 0.2 mm to 3.0 mm |

The diffractometric powder analysis revealed the presence of a high percentage of iron silicates, consisting mainly of fayalite ($FeSiO_4$), mixed with other silicates such as olivine (($MgFe)_2SiO_4$) and kirchsteinite ($CaFeSiO_4$).

The chemical composition of the collected sample in the form of single components or their oxides is reported in the following Table 2.

**Table 2**

| compound | content (weight %) |
|---|---|
| Iron oxide ($Fe_2O_3$) | 55.00 |
| Silica ($SiO_2$) | 35.00 |

(continued)

| compound | content (weight %) |
|---|---|
| Aluminum Oxide ($Al_2O_3$) | 3.01 |
| Calcium oxide (CaO) | 0.20 |
| Magnesium oxide (MgO) | 0.90 |
| Copper (Cu) | 0.42 |
| Titanium dioxide | 0.60 |
| Potassium oxide | 1.02 |

Example 2: Sample Preparation

The sample was in the form of powders with irregular morphology. It was then conducted a further comminution and an application of pressure during measurement to minimize the content of air and ensure good contact with the sensor used to detect the indicative dielectric properties at room temperature.

Example 3: Measurement of dielectric properties

The sample previously prepared has been subjected to measurement by the technique of the truncated coaxial cable connected to a vector network analyzer; the limitation of this technique is in the need to assure a perfect contact between material and sensor (absence of air in the interface), in the sensitivity of the instrument to variations along the transmission line from the network analizer to the sensor, as well as the need to ensure a minimum material thickness for measurements, preferably having a loss tangent (ratio between imaginary part and real part of permittivity) greater than 0.01.

The graph represented in Figure 2 summarizes the values of perceptiveness measured at a frequency of 2.45 GHz, typical of Industrial, Scientific and Medical (ISM) applications of microwaves. On the graph, merely indicative, dielectric properties (values of loss tangent) are reported at 2.45 GHz of materials known to be good absorbers of microwaves, such as water and silicon carbide (SiC).

In general, the absorption of microwaves at 2.45 GHz increases with increasing applied pressure due to decreased volume fraction of air and is favored by comminution. As can be seen, the loss tangent ($\tan\delta$) measured for the powders of the sample ground and slightly pressed is higher than that measured for dense silicon carbide, and close to the one of water.

Example 4: Preliminary heating tests

Preliminary heating tests were carried out by heating certain fractions of the sample previously prepared according to Example 2 and subjecting them to microwave radiation in a single mode applicator.

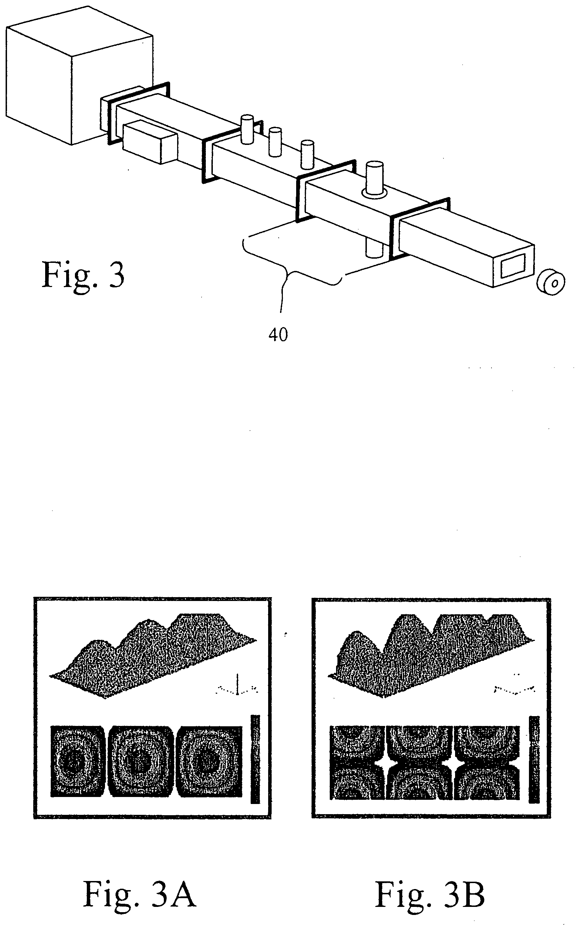

Figure 3 shows schematically the equipment used, which is equipped with a microwave generator at 2.45 GHz with a maximum power of 3 kW. Figures 3A and 3B respectively represent the distribution of the electric field and of the magnetic field in the longitudinal section 40 indicated in Figure 3. The sample fractions were placed in the area of maximum electric field and the temperature reached was measured by an optical pyrometer.

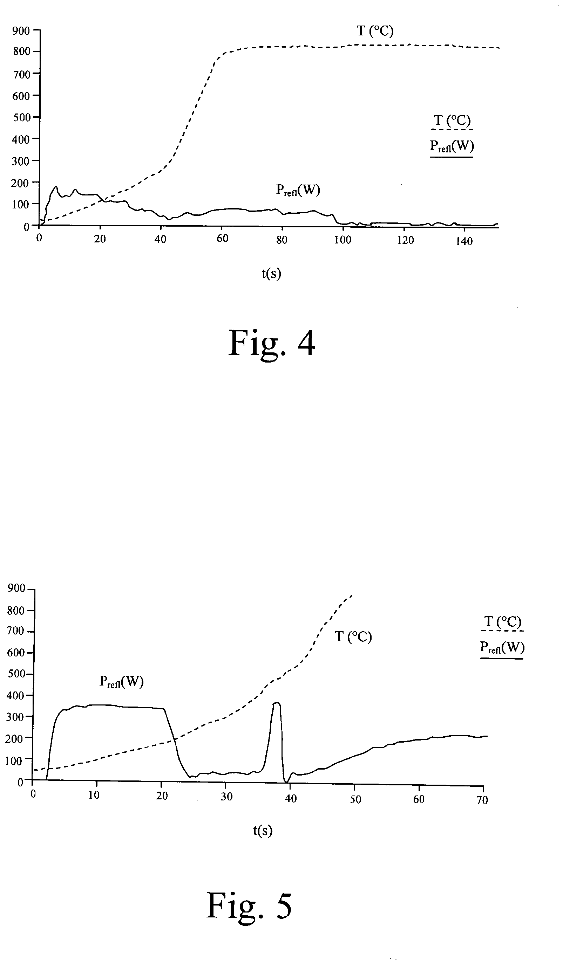

Figure 4 reports the temperature curve and the reflected power curve as a function of time maintaining the generator at a power of about 630 W. Figure 5 reports the same temperature and reflected power curves resulting from the application of microwave at the power of about 1260 W.

In the graphs of Figures 4 and 5, the reflected power curve, i.e. the power not absorbed by the sample material, was measured by means of directional coupler. The difference between the output power and the reflected one gives approximately the reflected power value absorbed by the system as a whole, i.e. the whole comprising the sample material, the oven, the refractory structure and heat losses.

By examining the temperature curves in both diagrams of Figures 4 and 5 one can see that, at the same power delivered to the load, the heating rate of the material tends to increase, probably for the most dissipative behavior of the material (increase of the loss tangent), as the temperature increases.

The curve of reflected power in the diagram of Figure 4 has a substantially decreasing trend over time, while the reflected power curve in the diagram of Figure 5 presents a sharp drop corresponding at the discharge phenomena such as electric arcs and plasma formations.

Example 5: Preliminary tests of the preparation of sintered and fused manufactured articles

On an experimental basis, specimens of sintered and fused cylindrical manufactured articles were made from grit and powders of the initial sample and from ground and pressed powders according to the preparation of Example 2.
The sintering preliminary tests were conducted at temperatures of 1100°C and 1300°C.
To promote sintering, comminution was carried out on dry and wet ground powders. The forming of cylindrical manufactured articles was then performed by pressing, either by adding an organic binder (PVA, PEG-5 wt% of solution 5 wt%), or and by a clay additive (2 wt% of bentonite).

Example 6: Preliminary tests of sintering and heating

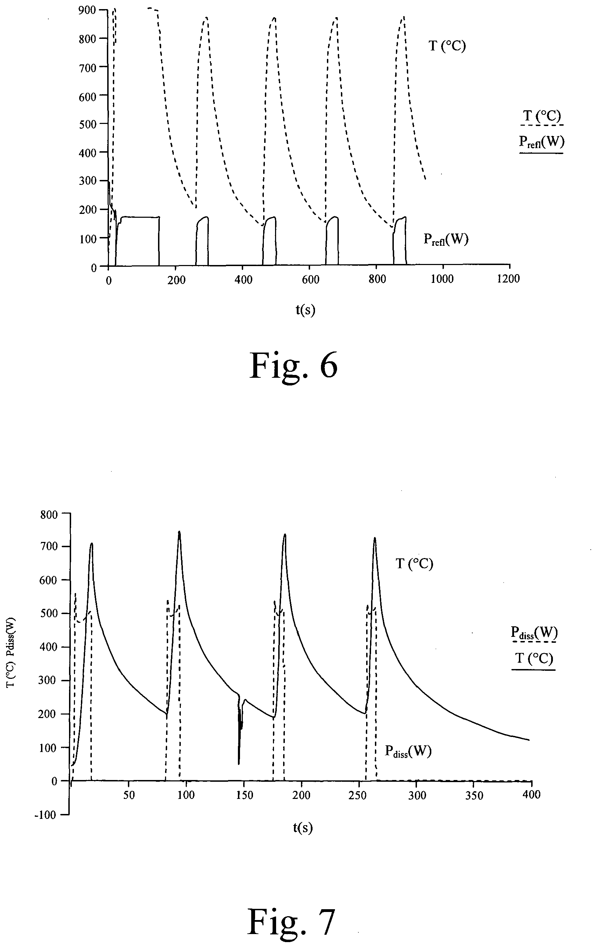

Some sintered specimens were exposed to microwaves in the area of maximum electric field of the instrument of Figure 3, acquiring the temperature and reflected power curves as a function of time.
Preliminarily, it has been started from powder samples, sintered by microwave during the first heating cycle, followed by additional cycles of microwave heating and cooling without extracting them from the oven.
The diagram of Figure 6 reveals that the powders have, at the same power applied, a higher heating rate during the first cycle; in other words, the temperature curve presents a higher slope in the first cycle, with reflected power that tends towards zero, and then tend to stabilize at a constant value during sintering. In the subsequent cycles heating takes place at a slightly lower speed and consecutive heating tests show no change of the sample behavior to sintering.

Example 7: Preparation of oven sintered specimens

Powders and granules of the original sample were wet-milled in a milling jar at high speed (100g water, 100g solid, 200g balls with a diameter in the range of 5mm-20mm) for 20 minutes. The resulting powder was then dried in a stove and sieved using 25 micron, 63 micron, 75 micron and 120 micron sieves.
The powders obtained are within these size ranges:

- powders with a granulometry below 25 microns
- powders with a granulometry between 25 and 63 microns;
- powders with a granulometry between 63 and 75micron;
- powders with a granulometry between 75 and 120 microns;
- powders with a granulometry greater than 120 microns.

Three specimens were then prepared, respectively referred to as A, B and C, consisting of different granulometries, namely:

- SPECIMEN A: 40g of powder with a granulometry less than 25micron + 2g of bentonite + 2g of water;
- SPECIMEN B: 40g of powder with a granulometry between 25 and 63 micron + 2g of bentonite + 2g of water;
- SPECIMEN C: 10g of powder with a granulometry less than 25 microns + 10g of powder with a granulometry between 25 and 63 microns + 10g of powder with granulometry between 63 and 75 microns + 10g of powder with granulometry between 75 and 120 microns + 2g of bentonite + 2g of water.

The ingredients of each specimen were properly dry mixed and successively pressed at 400 kg/cm$^2$ to obtain cylindrical specimens with a diameter of 40mm and a height between about 5 and 7mm.
The firing took place in a pit furnace with a hollow space (non-oxidizing atmosphere) in static air at 1100°C for 30 minutes. At the end of the isotherm, each specimen was removed from the oven and air-cooled.

Example 8: Heating tests of the specimens

To assess the existence of possible differences in behavior between the three specimens sintered in the oven, tests were carried out using the heating instrument of Figure 3 by placing the specimens in the area of maximum electric field.
The heating of each specimen was made following a thermal cycle, repeated four times, between 200 and 700°C in heating and cooling.
Specimen A: the specimen A had a mass of about 2.67 g. The graph in Figure 7 represents the temperature curve and the curve of power absorbed by the system during the four cycles of radiation and deactivation of the instrument of Figure 3.
The values detected for the temperature and the power absorbed by the system at each cycle are shown in Table 3 below.

Table 3 (specimen A)

| cycle | Q (J) | $\Delta T$ (°C) |
| --- | --- | --- |
| 1 | 7331,275 | 654 |
| 2 | 5529,048 | 540 |
| 3 | 4521,800 | 535 |
| 4 | 4021,555 | 521 |

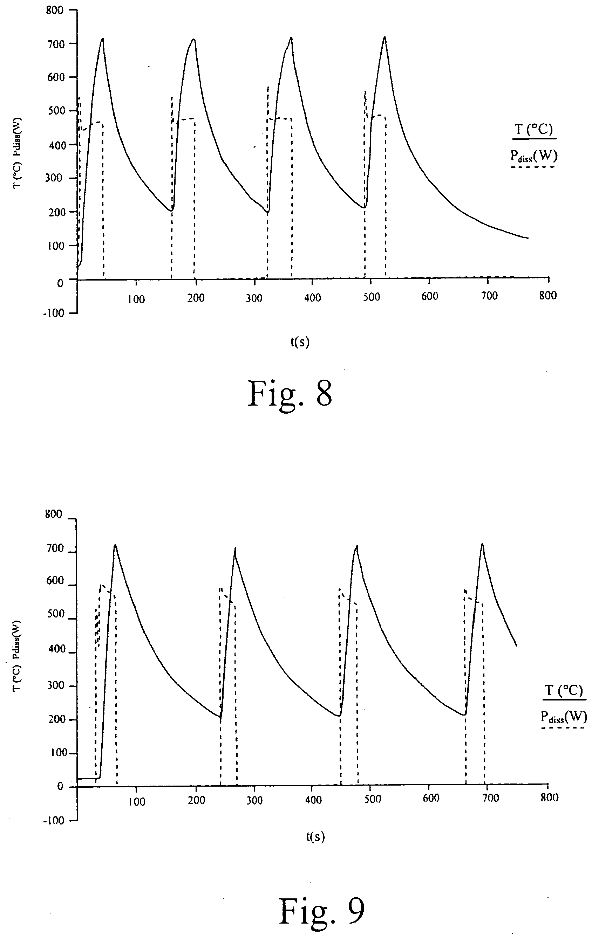

Specimen B: the specimen B had a mass of about 2.99 g. The graph of Figure 8 represents the temperature curves and the curve of power absorbed by the system during the four cycles of radiation and deactivation of the instrument of Figure 3. The values detected for the temperature and the power absorbed by the system at each cycle are shown in Table 4 below.

Table 4 (specimen B)

| Cycle | Q (J) | $\Delta T$ (°C) |
| --- | --- | --- |
| 1 | 18916,55 | 670 |
| 2 | 18007,06 | 511 |
| 3 | 20057,11 | 518 |
| 4 | 16926,37 | 517 |

Specimen C: the specimen C had a mass of about 6.90 g. The graph in Figure 9 represents the temperature curves and the curve of power absorbed by the system during the four cycles of radiation and deactivation of the instrument of Figure 3. The values obtained for the temperature and the power absorbed by the system at each cycle are shown in Table 5 below.

Table 5 (specimen C)

| cycle | Q (J) | $\Delta T$ (°C) |
| --- | --- | --- |
| 1 | 19580,07 | 686 |
| 2 | 15124,23 | 493 |
| 3 | 16087,52 | 505 |
| 4 | 17056,87 | 509 |

From the analysis of the values emerged for the specimens A, B and C the high repeatability can be seen of consecutive heating and cooling tests in the case of all three specimens.

The power value Q actually absorbed by the system has been approximately calculated, i.e. by evaluating the area underlying the curve of power actually absorbed by the system. This can lead to errors, since it includes energy dissipations, which vary according to the mass/volume ratio of the specimen, but at least resulting as significant for the comparison of the results obtained.

It is believed that the apparent better behavior of the specimen C (more temperature variation for the same absorbed energy) is likely due to the greater mass of the specimen itself, i.e. a specimen having a lesser surface that dissipates heat.

Example 9: Preparation of specimen using clay mixtures

Susceptor compound mixtures were prepared according to the invention and of a clay material (ceramic clays, feldspar, kaolin and sand) normally used in the ceramic industry for the production of tiles and/or dishware. The amounts of iron silicate (in the form of slag treated as described above) were 50 wt% and 40 wt% respectively.

The susceptor compound, had a size between 0.1-200 microns. The preparation of the mixture was made utilizing the process of atomization commonly used in the ceramic industry. The resulting atomized substance (having a moisture content of 6%) was pressed into a mold with dimensions 10x5x0.6 cm at a pressure of 300 kg/cm$^2$. The specimens thus obtained were then let to dry in an stove for 1 hour at 110°C and then cooked in an electric roller furnace at a temperature of 1150°C for 70 minutes. Mechanical breaking load tests executed on the specimens gave values equal to 505 kg/cm$^2$.

Heating tests on the specimens were then carried out in a microwave oven for domestic use (2.45 GHz) with a power of 800 W. The average weight of the specimens was approximately 84 g. Temperatures were detected using a portable optical pyrometer with the following results:

- After 30 sec of heating the surface temperature was equal to 350°C;
- 1 minute after, the surface temperature was equal to 650°C.

These results were obtained for both compositions 50-50% and 40-60%.

Example 10: Preparation of tiles utilizing clay mixtures

Mixtures prepared according to Example 9 were pressed into an industrial mold of a tile having dimensions 30x30x1 cm at a pressure of 300 kg/cm$^2$. The manufactured articles thus obtained were then let to dry in a stove for 1 hour at 110°C and then baked in an industrial roller furnace, powered by gas, at a temperature of 1050°C for 90 minutes.

From tiles thus made specimens were obtained at the size of 10x10 cm and at an average weight of approximately 280g.

Heating tests on the specimens were then carried out in a microwave oven for domestic use (2.45 GHz) with a power of approximately 800 W. Temperatures were measured by a portable optical pyrometer with the following results:

- after 30 seconds of heating the surface temperature was 200°C;
- 1 minute after, the surface temperature was equal to 350°C.

Also in this case, the same results were obtained for both compositions 50-50% and 40-60%.

EXAMPLE 10: Detection of the release of metals from iron silicate specimens into food.

Sintering plates were prepared like the Specimen A of Example 7, but using 5 wt% of an aqueous solution of polyvinyl alcohol (PVA) at 4% as initial binder. The plates were used for cooking cheese and tomato samples, at a temperature of 100°C for a period of 30 minutes (repeated contact).

The metal content in food after treatment was determined with a Perkin-Elmer OPTIMA 4300 with the detection limit of 0.05 ppm (mg/kg) and evaluated compared with the same food that was not in contact to detect the absence of release. The release of the following metals was searched for: Cd, Cr, Fe, Ni, Pb; for all of these the determined value was below the limit of 0.05 ppm, for both tested foods.

**Claims**

1. Use of iron silicate as a susceptor compound to increase its temperature when exposed to microwaves.

2. The use according to claim 1, wherein said iron silicate is contained in a composition comprising at least one organic or inorganic binder and said iron silicate is in the form of particles dispersed in said binder in a quantity within the range between 30 wt% and 85 wt%, said composition being suitable to be formed in a desired shape and size to provide a manufactured article.

3. The use according to claim 2, wherein said binder is selected from ceramic clay, feldspar, mixtures thereof and similar materials suitable for the production of ceramics, porcelain, tiles, stoneware and similar products.

4. The use according to claim 2 or 3, wherein said iron silicate is in a quantity within the range between 40 and 70 wt% of the final product.

5. The use according to any claim 2 to 4, wherein said binder contains a quantity of water that is less than 2.0% (w/w) and wherein preferably the binder is substantially anhydrous.

6. The use according to any claim from 1 to 5, wherein said iron silicate is used as filler or part of the filler in a formulation of thermoplastic material.

**7.** The use according to any of claims 1 or 6, wherein said iron silicate is the slag deriving from a process of refining copper.

**8.** The use according to any of claims 2 to 7, wherein said manufactured article is a heating element selected from a heating container for food; a hot plate for cooking food and/or for heating a cooking element; a cooking element for surface cooking of food; warming plates, panels or internal coating of domestic and/or industrial ovens; a heating element selected from a cylindrical shaped element, a heating element of a boiler for the production of hot water in a heating system and/or sanitary hot water, a heating element of a fan coil unit for the heating of air.

**9.** A process for heating a composite manufactured article comprising the steps of:

a) providing at least one inorganic susceptor compound, sensitive to electromagnetic radiation;
b) making a composite manufactured article in any desired shape and size with said inorganic susceptor compound,
c) exposing said manufactured article to radiation caused by an electromagnetic field or electromagnetic waves,

**characterized in that** said at least one inorganic compound susceptible to electromagnetic radiation is iron silicate and **in that** said radiation is selected from microwaves, wherein said iron silicate is present in a quantity within the range between 30 wt% and 85 wt% of the final product.

**10.** The process according to claim 9, further comprising the step of mixing said iron silicate or slag with at least one organic or inorganic binder before step b).

**Patentansprüche**

**1.** Verwendung von Eisensilikat als eine Suszeptorverbindung zur Erhöhung deren Temperatur bei Bestrahlung mit Mikrowellen.

**2.** Verwendung gemäß Anspruch 1, wobei das Eisensilikat in einer Zusammensetzung enthalten ist, die mindestens ein organisches oder anorganisches Bindemittel enthält, und das Eisensilikat in der Form von Teilchen vorliegt, die in dem Bindemittel in einer Menge innerhalb eines Bereiches von 30 Gew.-% bis 85 Gew.-% dispergiert ist, wobei die Zusammensetzung geeignet ist, in einer gewünschten Form und Größe geformt zu werden, um ein gefertigtes Erzeugnis bereitzustellen.

**3.** Verwendung gemäß Anspruch 2, wobei das Bindemittel aus keramischem Ton, Feldspat, Mischungen davon und ähnlichen Materialien, die zur Herstellung von Keramik, Porzellan, Fliesen, Steinzeug und ähnlichen Produkten geeignet sind, ausgewählt ist.

**4.** Verwendung gemäß Anspruch 2 oder 3, wobei das Eisensilikat in einer Menge im Bereich von 40 und 70 Gew.-% des Endprodukts enthalten ist.

**5.** Verwendung gemäß einem der Ansprüche 2 bis 4, wobei das Bindemittel eine Wassermenge von weniger als 2,0 Gew.-% (w/w) enthält und vorzugsweise das Bindemittel im wesentlichen wasserfrei ist.

**6.** Verwendung gemäß einem der Ansprüche 1 bis 5, wobei das Eisensilikat als Füllstoff oder als Teil eines Füllstoffes in einer Formulierung eines thermoplastischen Materials verwendet wird.

**7.** Verwendung gemäß einem der Ansprüche 1 bis 6, wobei das Eisensilikat die von einem Verfahren zur Verfeinerung von Kupfer abgeleitete Schlacke ist.

**8.** Verwendung gemäß einem der Ansprüche 2 bis 7, wobei das gefertigte Erzeugnis ein Heizelement ist, welches aus einem Heizbehälter für Speisen, einer Heizplatte zum Kochen von Speisen und/oder zum Erwärmen eines Kochelementes; einem Kochelement zum Oberflächenkochen von Speisen; Warmhalteplatten, Platten oder interne Beschichtung von Haushalts- und/oder Industrieöfen; einem Heizelement, ausgewählt aus einem zylinderförmigen Element, einem Heizelement eines Heizkessels zur Erzeugung von Warmwasser in einem Heizsystem und/oder von sanitärem Warmwasser, einem Heizelement eines Gebläsekonvektors zur Erwärmung von Luft ausgewählt ist.

**9.** Verfahren zum Erhitzen eines zusammengesetzten gefertigten Erzeugnisses, umfassend die Schritte:

a) Bereitstellen mindestens einer anorganischen Suszeptorverbindung, die für elektromagnetische Strahlung empfänglich ist;
b) Herstellen eines zusammengesetzten gefertigten Erzeugnisses in jeder gewünschten Form und Größe mit der anorganischen Suszeptorverbindung,
c) Bestrahlen des gefertigten Erzeugnisses mit einer Bestrahlung, die durch ein elektromagnetisches Feld oder elektromagnetische Wellen erzeugt wird, **dadurch gekennzeichnet, dass** die mindestens eine für elektromagnetische Strahlung empfängliche Verbindung Eisensilikat ist und dadurch, dass die Bestrahlung aus Mikrowellen ausgewählt ist, wobei das Eisensilikat in einer Menge innerhalb eines Bereiches von 30 Gew.-% bis 85 Gew.-% des Endproduktes enthalten ist.

**10.** Verfahren gemäß Anspruch 9, ferner umfassend den Schritt des Mischens des Eisensilikats oder der Schlacke mit mindestens einem organischen oder anorganischen Bindemittel vor dem Schritt b).

## Revendications

**1.** Utilisation d'un silicate de fer comme composé suscepteur pour augmenter sa température quand il est exposé à des micro-ondes.

**2.** Utilisation selon la revendication 1, dans laquelle ledit silicate de fer est contenu dans une composition comprenant au moins un liant organique ou inorganique et ledit silicate de fer est sous la forme de particules dispersées dans ledit liant en une quantité dans la plage entre 30 % en poids et 85 % en poids, ladite composition étant appropriée pour être formée sous une forme et taille souhaitées afin de fournir un article manufacturé.

**3.** Utilisation selon la revendication 2, dans laquelle ledit liant est sélectionné parmi une argile céramique, un feldspath, des mélanges de ceux-ci et des matériaux similaires appropriés pour la production de céramiques, d'une porcelaine, de carreaux, de grès cérames et de produits similaires.

**4.** Utilisation selon la revendication 2 ou 3, dans laquelle ledit silicate de fer est en une quantité dans la plage entre 40 et 70 % en poids du produit final.

**5.** Utilisation selon l'une quelconque des revendications 2 à 4, dans laquelle ledit liant contient une quantité d'eau qui est inférieure à 2,0 % (en poids/poids) et dans laquelle de préférence le liant est sensiblement anhydre.

**6.** Utilisation selon l'une quelconque des revendications 1 à 5, dans laquelle ledit silicate de fer est utilisé comme charge ou partie de la charge dans une formulation de matériau thermoplastique.

**7.** Utilisation selon l'une quelconque des revendications 1 à 6, dans laquelle ledit silicate de fer est le laitier dérivant d'un procédé de raffinage de cuivre.

**8.** Utilisation selon l'une quelconque des revendications 2 à 7, dans laquelle ledit article manufacturé est un élément chauffant sélectionné parmi un récipient chauffant pour aliment ; une plaque chauffante pour cuisiner des aliments et/ou pour chauffer un élément de cuisson ; un élément de cuisson pour la cuisson en surface d'un aliment ; les plaques chauffantes, les panneaux ou le revêtement interne de fours domestiques et/ou industriels ; un élément chauffant sélectionné parmi un élément de forme cylindrique, un élément chauffant d'une chaudière pour la production d'eau chaude dans un système chauffant et/ou d'eau chaude sanitaire, un élément chauffant d'un ventilo-convecteur pour le chauffage de l'air.

**9.** Procédé de chauffage d'un article manufacturé composite comprenant les étapes suivantes :

a) la fourniture d'au moins un composé suscepteur inorganique, sensible à un rayonnement électromagnétique ;
b) la préparation d'un article manufacturé composite sous n'importe quelle forme et taille souhaitées avec ledit composé suscepteur inorganique,
c) l'exposition dudit article manufacturé à un rayonnement causé par un champ électromagnétique ou des ondes électromagnétiques,

**caractérisé en ce que** ledit au moins un composé inorganique sensible à un rayonnement électromagnétique est un silicate de fer et **en ce que** ledit rayonnement est sélectionné parmi les micro-ondes, dans lequel ledit silicate de fer est présent en une quantité dans la plage entre 30 % en poids et 85 % en poids du produit final.

10. Procédé selon la revendication 9, comprenant en outre l'étape de mélange dudit silicate de fer ou d'un laitier avec au moins un liant organique ou inorganique avant l'étape b).

Fig. 1

Fig. 2

Fig. 3

40

Fig. 3A

Fig. 3B

Fig. 4

Fig. 5

Fig. 6

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4956533 A
- KR 200800225720
- KR 20030028859
- US 5183787 A
- EP 0496130 A
- WO 9724295 A

**Non-patent literature cited in the description**

- **BEGLEY et al.** Migration into food of polyethylene terephthalate (PET) cyclic oligomers from PET microwave susceptor packaging. *Food Addit Contam.,* November 1990, vol. 7 (6), 797-803